# FASCICULE DE BREVET EUROPEEN

(11) **EP 2 350 180 B1**
(45) Date de publication et mention de la délivrance du brevet: **02.09.2015**
(21) Numéro de dépôt: 09797081.8
(22) Date de dépôt: 25.11.2009
(51) Int. Cl.: C08K 3/04

(54) **UTILISATION D'UN GRAPHITE EXPANSE DANS UN MATERIAU POLYMERE.**
VERWENDUNG VON BLÄHGRAPHIT IN EINEM POLYMERMATERIAL
USE OF AN EXPANDED GRAPHITE IN A POLYMER MATERIAL

(30) Priorité: 27.11.2008 FR 0858056; 11.02.2009 FR 0950851
(43) Date de publication de la demande: 03.08.2011
(73) Titulaire: Arkema France, 92700 Colombes (FR)
(72) Inventeur: DUFAURE, Nicolas, F-27300 Bernay (FR); BRULE, Benoît, F-27170 Beaumont-Le-Roger (FR); DEVISME, Samuel, F-76000 Rouen (FR); BENET, Sylvain, F-27300 Bernay (FR)
(74) Mandataire: Zapalowicz, Francis
(86) Numéro de dépôt international: PCT/FR2009/052288
(87) Numéro de publication internationale: WO 2010/061129

(56) Documents cités:
- WO-A-2008/006443
- WO-A2-2009/043850
- GB-A- 2 313 632
- MARKOV, A. V.: "Rheological behavior of high filled polymers. Influence of fillers" MATERIALWISSENSCHAFT UND WERKSTOFFTECHNIK , 39(3), 227-233 CODEN: MATWER; ISSN: 0933-5137, mars 2008 (2008-03), XP008107391
- CIALLELLA C ET AL: "Expanded graphite offers new opportunities" PLASTICS ADDITIVES AND COMPOUNDING, ELSEVIER SCIENCE, OXOFRD, GB, vol. 10, no. 3, 1 mai 2008 (2008-05-01), pages 40-41, XP022666610 ISSN: 1464-391X [extrait le 2008-05-01]
- GRUENBERGER THOMAS M ET AL: "Graphite in rubber compounds - new opportunities with graphite products in the development of rubber compounds" PAPER, THE FALL TECHNICAL MEETING OF THE RUBBER DIVISION, AMERICAN CHEMICAL SOCIETY : PITTSBURGH, PA, NOVEMBER 1 - 3, 2005, AMERICAN CHEMICAL SOCIETY, PITTSBURGH, PA., US, vol. 4, 1 janvier 2005 (2005-01-01), pages 1-13, XP008107385
- F.A.N. FERNANDES ET AL: 'Neural network applications in polymerization processes' BRAZILIAN JOURNAL OF CHEMICAL ENGINEERING vol. 22, no. 3, 01 Septembre 2005, pages 401 - 418, XP055169539 DOI: 10.1590/S0104-66322005000300009 ISSN: 0104-6632

## Description

### Domaine de l'invention

La présente invention a pour objet l'utilisation d'un graphite expansé spécifique dans des matériaux polymères, et notamment dans des polymères thermoplastiques.

### Art antérieur et problème technique

De manière générale, les matériaux composites électriquement conducteurs sont constitués de particules conductrices dispersées dans une matrice organique ou minérale. Le seuil de conduction, ou seuil de percolation (transition isolant-conducteur), est atteint lorsque les particules conductrices forment un réseau de chemins conducteurs connectés dans tout le volume du matériau composite.

Les particules conductrices peuvent être métalliques, ce qui présente l'avantage d'une bonne conductivité électrique. Elles présentent toutefois l'inconvénient de posséder une densité élevée et d'être sensibles à l'environnement chimique. Les particules non métalliques sont particulièrement intéressantes pour leur faible densité et leur résistance chimique. Les charges conductrices non métalliques les plus utilisées sont les produits pulvérulents à base de carbone, tels que les poudres de noir de carbone ou de graphite et les fibres de carbone.

Il est également connu, que les charges carbonées telles que les fibres de carbone, le noir de carbone ou le graphite, ainsi que les nitrures de bore ou d'aluminium possèdent de bonnes propriétés de conductivité thermique. De ce fait, ces charges ont été incorporées dans des matrices polymères pour conférer à ces dernières une conductivité thermique améliorée. Il est à noter que les polymères sont de très mauvais conducteurs thermiques, ce qui en limite les applications, dès lors que le cahier des charges demande une dissipation et/ou un échange de chaleur.

Au cours de ces dernières années, l'utilisation de nanotubes de carbone (souvent notés NTC) s'est très largement développée. En effet, il a été constaté que ces nanotubes conféraient aux matériaux, auxquels ils étaient incorporés, d'excellentes propriétés thermiques, électriques et voire dans certains cas mécaniques (WO 91/03057, US 5 744 235, US 5 445 327).

On trouve des applications des nanotubes de carbone dans de nombreux domaines, notamment en électronique, en mécanique, ou en électromécanique. En effet, dans le domaine de l'électronique, selon leur température et leur structure, les matériaux composites, dans lesquel se trouvent les nanotubes de carbone, peuvent être conducteurs, semi-conducteurs ou isolants. En mécanique, des nanotubes de carbone peuvent être utilisés pour le renfort des matériaux composites. En effet, les nanotubes de carbone sont cent fois plus résistants et six fois plus légers que l'acier. Enfin, dans le domaine de l'électromécanique, les nanotubes de carbone présentent l'avantage de pouvoir s'allonger ou se contracter par injection de charge. On peut par exemple citer l'utilisation de nanotubes de carbone dans des compositions macromoléculaires destinées à l'emballage de composants électroniques, à la fabrication de conduites d'essence (fuel line), de revêtements ou coating antistatiques, dans des thermistors, des électrodes pour super-capacités, etc.

Toutefois, les charges carbonées précédemment citées, ainsi que les charges métalliques, ont pour inconvénient de devoir être introduites à des hautes teneurs (>20% en poids) pour pouvoir augmenter significativement (d'un facteur 2 au moins) la conductivité thermique du matériau, dans lequel elles se trouvent. Or, leur présence en des teneurs importantes agit très souvent sur l'aptitude du matériau à être mis en forme.

Ainsi, if existe toujours un réel besoin de trouver des charges présentant de meilleures propriétés thermiques, électriques, des charges qui soient moins denses ou encore moins coûteuses. De plus, ces charges ne doivent pas non plus compromettre la transformation du produit selon des méthodes classiques, telles que l'extrusion ou l'injection.

### Brève description de l'invention

Le document « Rheologisches verhalten hochgefüllter Kunststoffe. Einfluss des Füllstoffe », Mat.-wiss. U. Werkstofftech. 2008. 39, No 3, de A.V.Markov décrit le comportement rhéologique des différents polymères tels que des polyamides, notamment le PA 6, en fonction de la nature et de la teneur de la charge. Parmi les charges mises en oeuvre, le graphite expansé est étudié.

Le document «Expanded graphite offers new opportunities », Plastics Additives & Compounding May/June 2008, Elsevier Science ; Oxford, de C.Ciallella, et al, décrit le comportement de différents graphites dans le polyéthylène haute densité et dans le polypropylène.

Le document WO2009/043850 décrit un procédé de préparation d'un polymère thermiquement conducteur et transformable à chaud comprenant une première étape de mélange à l'état fondu d'un polymère thermoplastique, d'une charge thermiquement conductrice et éventuellement d'un ou plusieurs autres composés, de manière à obtenir un mélange fondu homogène et une seconde étape de refroidissement du mélange fondu homogène de manière à obtenir une composition polymère sous forme solide, la charge thermiquement conductrice comprenant une poudre graphite comprenant des plaquettes ayant une épaisseur de moins de 500 nm.

L'incorporation de graphite expansé dans les polymères permet d'obtenir des matériaux présentant des conductivités thermiques très supérieures à celles connues à ce jour avec les nanotubes de carbone, tout en présentant une conductivité électrique de l'ordre de celle obtenue avec les nanotubes de carbone et une fluidité améliorée, permettant ainsi la mise en forme du matériau plus aisée selon des méthodes bien connues de l'homme du métier (injection, extrusion...).

L'invention a pour objet l'utilisation de graphite expansé, dont la surface spécifique est comprise entre 15 et 30 m²/g, et la densité apparente est inférieure à 0,1 g/cm³, avec une taille moyenne de particules supérieure à 15 µm, pour conférer à un matériau polymère, et notamment à un polymère thermoplastique, des propriétés de conductivité thermiques, électriques et de rhéologie adaptée à la transformation dudit matériau polymère.

D'autres objets, aspects, caractéristiques de l'invention apparaîtront à la lecture de la description suivante.

### Description détaillée de l'invention

Par graphite expansé, on entend un graphite traité afin d'augmenter la distance entre les feuillets de graphite. Il en résulte une augmentation de la surface spécifique et une baisse de la densité apparente. Le graphite expansé selon l'invention est un graphite qui présente une surface spécifique BET (Brunauer, Emmett et Teller) comprise entre 15 et 30 m²/g, une densité apparente (ou densité de Scott) inférieure à 0,1 g/cm³, pour une taille moyenne de particules supérieure à 15 µm.

Il est précisé que l'expression "compris entre" utilisée dans les paragraphes précédents, mais également dans la suite de la présente description, doit s'entendre comme incluant chacune des bornes mentionnées.

Par surface spécifique BET (Brunauer, Emmett et Teller), on entend la surface disponible par gramme de matière. Cette mesure est basée sur une adsorption de gaz à la surface du solide étudié, telles que celles décrites dans les normes ASTM D6556 et ISO 9277 :1995. De préférence, la surface spécifique BET est comprise entre 20 et 30 m²/g.

Par densité apparente (ou densité de Scott), on entend la densité de la poudre dans son ensemble, en incluant les espaces compris entre les particules de taille micro- ou nano-métrique. Cette densité peut être mesurée suivant des méthodes normées, telle que celle détaillée dans les normes ASTM B329 et ISO 3923-2 : 1981 à l'aide d'un voluménomètre de Scott. De préférence, la densité est comprise entre 0,01 et 0,09 g/cm³.

Par taille moyenne de particules, on entend un diamètre de particules tel que 50% des particules en poids ont un diamètre inférieur à ce premier diamètre. Cette taille peut être mesurée par différentes méthodes, nous pouvons citer la granulométrie laser ou le tamisage. De préférence, la taille moyenne des particules est comprise entre 20 et 500 µm.

Le graphite expansé selon l'invention peut être obtenu auprès de la société Timcal, sous la dénomination BNB90.

Les polymères thermoplastiques selon l'invention sont choisis parmi les homopolymères et copolymères d'acide (meth)acrylique et d'esters d'acide (meth)acrylique, les polymères vinyliques, les polyamides aromatiques et non aromatiques (PA), les polyéther-bloc-amides (PEBA), les polycarbonates (PC), les polyoléfines fonctionnelles ou non, les polymères fluorés, les poly-arylène-éther-cétones (PAEK) et les copolymères contenant majoritairement les monomères des polymères cités ci-dessus.

Parmi les familles de polymères ci-dessus, on peut citer :
- les homopolymères et copolymères d'acide acrylique, les homopolymères et copolymères d'acide méthacrylique, les esters d'acide acrylique et les esters d'acide méthacrylique, tels que les méthacrylate d'alkyle, comme le polyméthylméthacrylate (PMMA), d'éthyle, de n-butyle et d'hexyle ; les (méth)acrylates d'hydroxyalkyle tels que le (méth)acrylate d'hydroxyéthyle, d'hydroxypropyle ; acrylamide et leur mélange ;
- les polymères vinyliques, tels que l'alcool polyvinylique, le poly(chlorure de vinyle) (PVC), le poly(chlorure de vinylidène), le poly(acétate de vinyle), les copolymères des polymères mentionnés précédemment avec au moins un monomère copolymérisable, tel que un copolymère éthylène-acétate de vinyle ;

- les polyamides non aromatiques (PA), tels que les homopolymères, tels que l'homopolyamide du lauryllactame (PA12), l'homopolyamide de l'acide 11-aminoundécanoïque (PA11), les copolymères, ou copolyamides, à base de différents motifs amide, tel par exemple le copolyamide obtenu par polycondensation du lactame-6 et du lactame-12 (PA 6/12), l'homopolyamide obtenu par polycondensation de la décanediamine et de l'acide décanedioïque (PA10.10), l'homopolyamide obtenu par polycondensation de l'hexanediamine et de l'acide dodécanedioïque (PA 6.12) ; la nomenclature des polyamides étant connue et décrite dans la norme ISO 1874-1:1992 "PlastiquesMatériaux polyamides (PA) pour moulage et extrusion -- Partie 1: Désignation" ;
- les polyamides aromatiques, notamment les polyphtalamides (notés PPA). De préférence, les polyphtalamides sont de formule A/X.T et A/X.T/Y,
avec A désignant un composé aliphatique de type aminoacide, lactame, de préférence A désigne le lauryllactame ou l'acide 11-aminoundécanoïque (A = 11 ou 12),
X désignant une diamine aliphatique comprenant de 4 à 20 atomes de carbone, de préférence, X désigne la décanediamine (X = 10),
T désignant l'acide téréphtalique,
Y désignant tout polyamide aliphatique, cycloaliphatique ou semi-aromatique. De préférence, le polyphtalamide comporte 0 à 2 moles de motifs A pour 1 mole de motifs X.T et comporte 0 à 50% en mole de Y par rapport au nombre de mole total du polyphtalamide.

Cette formule couvre par exemple le copolyamide obtenu par polycondensation du lauryllactame, de la décanediamine et de l'acide téréphtalique (PA 12/10.T), le copolyamide obtenu par polycondensation de l'acide 11-aminoundécanoïque, de la décanediamine et de l'acide téréphtalique (PA 11/10.T), le copolyamide obtenu par polycondensation de l'acide 11-aminoundécanoïque, de l'hexanediamine et de l'acide téréphtalique (PA 11/6.T), le copolyamide obtenu par polycondensation de l'hexanediamine, de l'acide téréphtalique et de l'acide isophtalique (PA 6.I/6.T), l'homopolyamide obtenu par polycondensation de la dodécanediamine et de l'acide téréphtalique (PA 12.T), le terpolymère obtenu par polycondensation de l'acide 11-aminoundécanoïque, de la décanediamine, de l'hexanediamine et de l'acide téréphtalique (11/10.T/6.T).

Parmi les polyamides aromatiques, l'homopolyamide obtenu par polycondensation de méta-xylylène diamine, seule ou en mélange avec la para-xylylène diamine, et d'acide décanedioïque (MXD.10) peut également être utilisé.
- les mélanges de polyamides, les polyéther-bloc-amides (PEBA), et les mélanges de polyamides et de PEBA,
- les polycarbonates (PC),
- les polyoléfines, telles que les copolymères d'éthylène ou propylène, tel que les copolymères éthylène-propylène-diène, et d'au moins un monomère acrylique ou vinylique, tels que les copolymères éthylène/(méth)acrylate d'alkyle, ces polyoléfines pouvant être fonctionnelles, c'est-à-dire comprendre en outre une fonction acide carboxylique, anhydride ou époxy,
- les polymères fluorés, tel que le poly(fluorure de vinylidène) (PVDF), le copolymère d'éthylène et de tétrafluoroéthylène (ETFE), le copolymère d'éthylène, de tétrafluoroéthylène et d'hexafluoro-propylène (EFEP);
- les poly-arylène-éther-cétones, également nommés PAEK (PolyArylEtherKétone en langue anglaise),
et les copolymères contenant majoritairement les monomères des polymères cités ci-dessus.

Les poly-arylène-éther-cétones (PAEK) comportent les motifs de formules suivantes :

(-Ar-X-) et (-Ar₁-Y-)

dans lesquelles :
Ar et Ar₁ désignent chacun un radical aromatique divalent ;
Ar et Ar₁ peuvent être choisis, de préférence, parmi le 1,3-phénylène, 1,4-phénylène, le 4,4'-biphénylène, le 1,4- naphthylène, le 1,5-naphthylène et le 2,6-naphthylène ;
X désigne un groupe électro-attracteur ; il peut être choisi, de préférence, parmi le groupe carbonyle et le groupe sulfonyle,
Y désigne un groupe choisi parmi un atome d'oxygène, un atome de soufre, un groupe alkylène, tel que -CH₂- et isopropylidène.

Dans ces motifs, au moins 50%, de préférence au moins 70% et plus particulièrement, au moins 80% des groupes X sont un groupe carbonyle, et au moins 50%, de préférence au moins 70% et plus particulièrement au moins 80% des groupes Y représentent un atome d'oxygène.

Selon un mode de réalisation préféré, 100% des groupes X désignent un groupe carbonyle et 100% des groupes Y représentent un atome d'oxygène.

Plus préférentiellement, le poly-arylène-éther-cétone (PAEK) peut être choisi parmi :
- un poly-éther-éther-cétone également nommé PEEK comprenant des motifs de formule I : 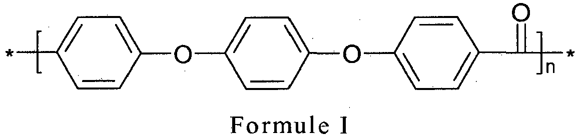
- un poly-éther-cétone également nommé PEK, comprenant des motifs de formule II : 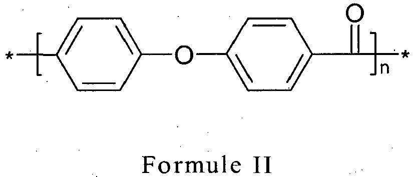
- un poly-éther-cétone-cétone également nommé PEKK, comprenant des motifs de formules IIIA, de formule IIIB et leur mélange : 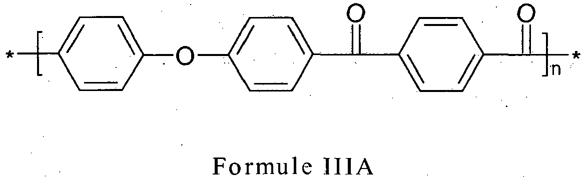 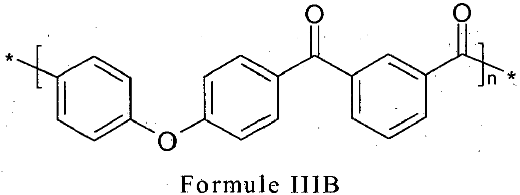
- et un poly-éther-éther-cétone-cétone également nommé PEEKK, comprenant des motifs de formules IV : 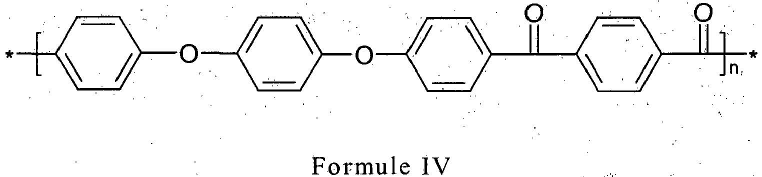
mais d'autres arrangements du groupe carbonyle et de l'atome d'oxygène sont également possibles.

Le poly-arylène-éther-cétone utilisable selon l'invention peut être cristallin, semi-cristallin ou amorphe.

De préférence, les polymères thermoplastiques utilisés sont des polyamides et plus particulièrement le PA11, PA12, PA11/10.T, PA11/6.T et PA MXD.10, tels que mentionnés ci-dessus.

Ainsi, le graphite expansé tel que défini ci-dessus forme avec le polymère thermoplastique auquel il est ajouté, également défini ci-dessus une composition.

Cette composition comprend :
- au moins un polymère thermoplastique choisi parmi les homopolymères et copolymères d'acide (meth)acrylique et d'esters d'acide (meth)acrylique, les polymères vinyliques, les polyamides aromatiques et non aromatiques (PA), les polyéther-bloc-amides (PEBA), les polycarbonates (PC), les polyoléfines fonctionnelles ou non, les polymères fluorés, les poly-arylènc-éther-cétones (PAEK) et les copolymères contenant majoritairement les monomères des polymères cités ci-dessus,
- au moins 1% en poids par rapport au poids total de la composition d'un graphite expansé, dont la surface spécifique BET est comprise entre 15 et 30 m²/g, et la densité apparente est inférieure à 0.1 g/cm³, pour une taille moyenne de particules supérieure à 15 µm.

Le graphite expansé selon l'invention est compris dans la composition entre 1 et 50% en poids par rapport au poids total de la composition, de préférence entre 5 et 35%.

La composition peut également comprendre en outre au moins un additif.

Cet additif peut notamment être choisi parmi des modifiants chocs, des fibres, des colorants, des stabilisants à la lumière, notamment UV et/ou à la chaleur, des plastifiants, des agents de démoulage, des agents d'ignifugation, des charges autres que le graphite expansé tel que décrit ci-dessus, telles que talc, fibres de verre, pigments, oxydes métalliques, métaux, des agents tensioactifs, les lubrifiants, les anti-UV, les antistatiques, les azurants, tels que des azurants optiques, des anti-oxydants, des cires naturelles et leurs mélanges.

Parmi les charges autres que le graphite expansé tel que décrit ci-dessus, on peut notamment citer la silice, le noir de carbone, les nanotubes de carbone, le graphite non expansé, l'oxyde de titane ou encore les billes de verre.

De préférence, les additifs sont présents dans la composition généralement en une teneur comprise entre 0,1 et 50%, de préférence comprise entre 0,5 et 40% en poids par rapport au poids total de la composition.

La composition peut se trouver sous forme d'une structure.

Cette structure peut être monocouche, lorsqu'elle n'est formée que de la composition.

Cette structure peut également être une structure multicouche, lorsqu'elle comprend au moins deux couches et que l'une au moins des différentes couches formant la structure est formée de la composition.

La structure, qu'elle soit monocouche ou multicouche, peut notamment se présenter sous la forme de fibres (par exemple pour former un tissé ou un non tissé), d'un film, de feuille, d'un tube, d'un corps creux ou d'une pièce injectée.

Ainsi, toute pièce destinée à conduire de la chaleur peut être réalisée à partir de cette composition. Par conséquent, certaines pièces réalisées actuellement en métal pourront être remplacées par des pièces réalisées à partir de ladite composition. Ce remplacement présente l'avantage de conduire à un allégement des structures existantes.

La composition telle que définie ci-dessus peut être préparée à partir du procédé de préparation suivant. Selon ce procédé, le graphite expansé est introduit dans la matrice polymère, la température de mélange étant fonction de la nature du ou des polymères utilisés pour constituer la matrice. Ce mélangeage s'effectue sur un outil de mélange (compoundage) standard tel qu'un comalaxeur ou une extrudeuse bi-vis.

La composition telle que définie ci-dessus peut avantageusement être utilisée pour la réalisation de tout ou partie d'éléments de biens d'équipements automobiles, tels que des pièces injectées (que celles-ci soient disposées sous capot moteur ou non), dans le domaine aéronautique pour le remplacement de pièces métalliques, dans le domaine industriel pour le revêtement de réacteur ou d'échangeur de chaleur, dans le domaine énergétique, répondant au besoin de dissiper la chaleur en allégeant les pièces, notamment pour des pièces de refroidissement dues à l'augmentation des puissances, ou pour des applications photovoltaïque, pour des articles de sport ou de loisirs, tels que des chaussures nécessitant la dissipation de la chaleur ou encore pour des composants électriques et électroniques.

Un article peut être obtenu par injection, extrusion, coextrusion, compression à chaud à partir d'au moins une composition telle que définie ci-dessus.

### Exemples

### 1 : Préparation de compositions

### a) préparation en mélangeur interne

Les polymères et les charges cités ci-dessous sont mélangés dans un mélangeur interne de marque Brabender à une température de 260°C pour le polyamide ou de 240°C pour les polyéther-bloc-amides pendant 10 minutes à 50 rpm.

### Polymères testés :

- polyamide PA12 vendu par Arkema sous la dénomination Rilsan^{®} AMNO TLD
- polyéther-bloc-amide vendu par Arkema sous la dénomination Pebax^{®} 5533

### Charges testées :

- Graphite expansé selon l'invention vendu par Timcal sous la dénomination BNB 90,
- nanotubes (noté NTC) vendus par Arkema sous la forme de MB Graphistrength^{®},
- noir de carbone vendu par Timcal sous la dénomination Ensaco 250G,
- fibres de carbone,
- nitrure d'aluminium et
- nitrure de bore

### Différentes associations sont testées :

A/ avec une matrice polyamide de type Rilsan^{®} AMNO TLD :
   - matrice polyamide seul sans charge,
   - matrice polyamide + 5% de nanotubes de carbone (NTC)
   - matrice polyamide + 10% de nanotubes de carbone (NTC)
   - matrice polyamide + 15% de nanotubes de carbone (NTC)
   - matrice polyamide + 20% de nanotubes de carbone (NTC)
   - matrice polyamide + 20% de graphite expansé selon l'invention
   - matrice polyamide + 18% de graphite expansé selon l'invention
   - matrice polyamide + 20% de noir de carbone
   - matrice polyamide + 20% de fibres de carbone
   - matrice polyamide + 10% de nitrure de bore
   - matrice polyamide + 20% de nitrure de bore
   - matrice polyamide + 20% de nitrure d'aluminium
   - matrice polyamide + 10% de fibre de carbone + 10% de nanotubes de carbone (NTC)
   - matrice polyamide + 10% de graphite expansé selon l'invention + 10% de nanotubes de carbone (NTC)
   - matrice polyamide + 10% de nitrure d'aluminium+ 10% de nanotubes de carbone (NTC)
B/ avec une matrice polyéther-bloc-amide de type Pebax^{®} 5533 :
   - matrice polyéther-bloc-amide seul sans charge,
   - matrice polyéther-bloc-amide + 10% de nanotubes de carbone (NTC)
   - matrice polyéther-bloc-amide + 15% de nanotubes de carbone (NTC)
   - matrice polyéther-bloc-amide + 20% de nanotubes de carbone (NTC)
   - matrice polyéther-bloc-amide + 20% de graphite expansé selon l'invention
   - matrice polyéther-bloc-amide + 20% de fibres de carbone
   - matrice polyéther-bloc-amide + 20% de nitrure d'aluminium

Les compositions ainsi préparées sont compressées sous forme de plaques d'épaisseur de 4 mm et 6X6 cm² de côté. Les plaques sont réalisées dans les conditions suivantes : 4 min de préchauffage à 230°C sans pression, puis 2 min à 230°C sous 100 bars, puis 3 min sous 50 bars en refroidissement

### b) préparation en comalaxeur

7 compositions sont préparées à partir du polymère et les charges cités ci-dessous. Les compositions sont réalisées à l'aide d'un comalaxeur BUSS 15D tournant à 280 rpm et avec le profil de température suivant : 220°C vis, température fourreau : 240°C.

### Polymère testé :

- polyamide PA11 vendu par Arkema sous la dénomination Rilsan^{®} BMNO TLD

### Charges et additifs testés :

- Graphite expansé selon l'invention vendu par Timcal sous la dénomination BNB 90,
- copolymère d'éthylène et de propylène EPR (abréviation d'ethylene-propylene-rubber) VA 1801 utilisé en tant que modifiant choc ;
- polyéther-bloc-amide vendu par Arkema sous la dénomination Pebax^{®} MX1205 utilisé en tant que modifiant choc ;
- nanotubes (noté NTC) vendus par Arkema sous la forme de MB Graphistrength^{®},
- graphite non expansé vendu par Timcal sous la dénomination KS150.

Différentes associations sont testées avec une matrice polyamide de type Rilsan^{®} BMNO TLD :
- matrice polyamide Rilsan^{®} BMNO + 20% de graphite expansé selon l'invention
- matrice polyamide + 20% de graphite expansé selon l'invention et 10% d'EPR VA 1801
- matrice polyamide + 20% de graphite expansé selon l'invention et 15% de Pebax^{®} MX1205
- matrice polyamide + 10% de graphite expansé selon l'invention
- matrice polyamide + 10% de graphite expansé selon l'invention et 3% de NTC
- matrice polyamide + 15% de graphite expansé selon l'invention
- matrice polyamide + 20% de graphite non expansé vendu par Timcal sous la dénomination KS150

Les compositions sont ensuite injectées pour obtenir des plaques de 4 mm d'épaisseur et 10X10 cm² de côté. La température d'injection alimentation/buse est de 260/280°C et le moule est à 60°C.

### 2 : Mesure de la conductivité thermique

La conductivité thermique de chacune des plaques réalisées est mesurée par la technique du Hot Disk à l'aide de l'appareil : Hot disk TPS 250, appareil développé par la société Thermoconcept.

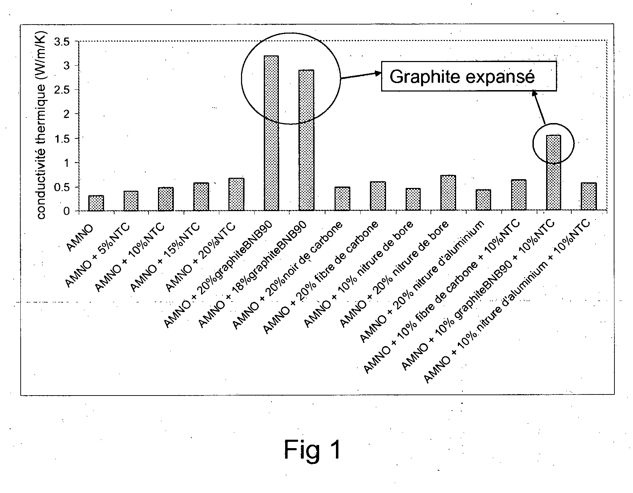

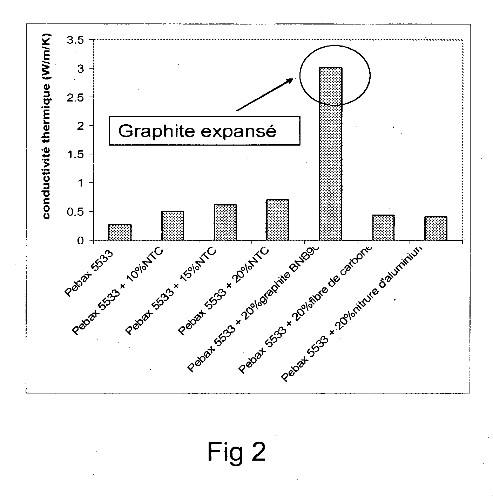

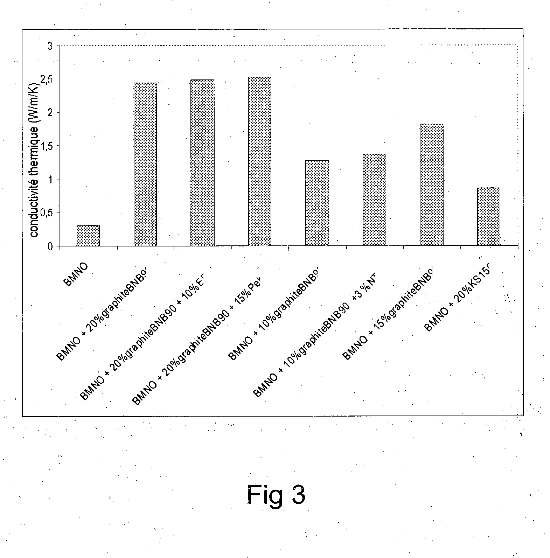

Les mesures effectuées sont reportées dans les diagrammes ci-dessous :
2.1) avec une matrice polyamide de type Rilsan®AMNO TLD :
   Voir figure 1
2.2) avec une matrice polyéther-bloc-amide de type Pebax®5533 :
   Voir figure 2
2.3) avec une matrice polyamide de type Rilsan®BMNO TLD :
   Voir figure 3

Ces résultats montrent que la présence de graphite expansé au sein de la matrice polymère permet l'obtention d'une conductivité thermique supérieure aux conductivités thermiques obtenues avec les charges usuelles, que ce soit avec les nanotubes de carbone ou le graphite non expansé.

Le graphite expansé selon l'invention a un effet très supérieur aux autres charges carbonées sur la conductivité thermique : par exemple, il a été calculé qu'introduit à 2% dans une matrice polymère, il induit une conductivité thermique équivalente à celle obtenue par un mélange d'une même matrice avec 10% de nanotubes de carbone.

### 3 : Mesure de la conductivité électrique

La conductivité électrique de plaques réalisées est mesurée par la méthode des électrodes. La réalisation des électrodes est effectuée avec de la laque d'argent. La résistance superficielle entre les deux électrodes est mesurée à l'aide d'un megohmètre.

Les mesures effectuées sont reportées dans le tableau ci-dessous :

| matériaux | Résistance superficielle (Ohm) |
|---|---|
| AMNO seul (comparatif) | 1.10¹⁴ |
| AMNO + 20% NTC (comparatif) | 2.10³ |
| AMNO + 20% noir de carbone (comparatif) | 9.10³ |
| AMNO + 10% BNB 90 + 10% NTC (selon l'invention) | 2.10³ |
| AMNO + 20% BNB 90 (selon l'invention) | 2.10³ |

Ces résultats montrent que la présence de graphite expansé au sein de la matrice polymère permet l'obtention d'une conductivité électrique comparable à celle obtenue avec les nanotubes de carbone, soit très satisfaisant.

### 4 : Mesure des propriétés en écoulement des matériaux fondus

Le comportement viscoélastique de certains mélanges préparés selon l'exemple 1.a a été étudié à l'aide d'un rhéomètre à contrainte imposée Physica MCR301. La température a été fixée à 260°C. Les modules de viscosité complexe à 1,35 rad/s sont reportés dans le tableau ci-dessous :

| matériaux | Viscosité complexe (Pa.s) |
|---|---|
| AMNO seul (comparatif) | 61 |
| AMNO + 5% NTC (comparatif) | 4 750 |
| AMNO + 10% NTC (comparatif) | 37 000 |
| AMNO + 20% NTC (comparatif) | 556 000 |
| AMNO + 10%NTC + 10% BNB90 (selon l'invention) | 131 000 |
| AMNO + 20% BNB90 (selon l'invention) | 5 790 |

Plus le matériau est fluide (viscosité faible), plus il sera facile à mettre en oeuvre au cours de sa transformation.

Ces résultats montrent que la viscosité à faible fréquence est beaucoup moins augmentée, lorsque le matériau contient du graphite expansé selon l'invention, comparé au matériau comportant des NTC. Le matériau comportant 20% de graphite expansé présente une viscosité comparable à celle mesurée pour un matériau comportant 5% de NTC.

### Conclusion :

Le matériau contenant du graphite expansé a un effet très supérieur aux autres charges carbonées sur la conductivité thermique, a un effet comparables aux nanotubes de carbone sur la conductivité électrique et est beaucoup plus fluide.

## Revendications

1. Utilisation de graphite expansé, dont
la surface spécifique BET mesurée selon la norme ASTM D6556 ou ISO 9277 est comprise entre 15 et 30 m²/g,
la densité apparente mesurée selon la norme ASTM B329 ou ISO 3923-2 est inférieure à 0,1 g/cm³,
pour une taille moyenne des particules mesurée par granulométrie laser ou tamisage supérieure à 15 µm,
pour conférer à la composition qu'il forme avec un polymère thermoplastique des propriétés de conductivité thermique supérieure, de conductivité électrique comparable et une fluidité améliorée par rapport à celles obtenues avec l'utilisation de nanotubes de carbone.

2. Utilisation selon la revendication 1, **caractérisée en ce que** la composition comprend au moins un polymère thermoplastique choisi parmi les homopolymères et copolymère d'acide (meth)acrylique et d'esters d'acide (meth)acrylique, les polymères vinyliques, les polyamides aromatiques et non aromatiques (PA), les polyéther-bloc-amides (PEBA), les polycarbonates (PC), les polyoléfines fonctionnelles ou non, les polymères fluorés, les poly-arylène-éther-cétones (PAEK) et les copolymères contenant majoritairement les monomères des polymères cités ci-dessus.

3. Utilisation selon la revendication 1 ou 2, **caractérisée en ce que** le graphite expansé est présent en une teneur comprise entre 1 et 50% en poids, et de préférence entre 5 et 35% en poids par rapport au poids total de la composition.

4. Utilisation selon l'une quelconque des revendications 1 à 3, **caractérisée en ce que** le polymère thermoplastique est choisi parmi les polyamides aromatiques et non aromatiques, les polyéther-bloc-amides et les poly-arylène-éther-cétones.

5. Utilisation selon la revendication 4, **caractérisée en ce que** le polymère thermoplastique est choisi parmi l'homopolyamide du lauryllactame (PA12), l'homopolyamide de l'acide 11-aminoundécanoïque (PA11), le copolyamide obtenu par polycondensation du laurolactame, de la décanediamine et de l'acide téréphtalique (PA 12/10.T), le copolyamide obtenu par polycondensation de l'acide 11-aminoundécanoïque, de la décanédiamine et de l'acide téréphtalique (PA 11/10.T), le copolyamide obtenu par polycondensation de l'acide 11-aminoundécanoïque, de l'héxanediamine et de l'acide téréphtalique (PA 11/6.T), le copolyamide obtenu par polycondensation de l'héxanediamine, de l'acide téréphtalique et de l'acide isophtalique (PA 6.I/6.T), l'homopolyamide obtenu par polycondensation de la dodécanediamine et de l'acide téréphtalique (PA 12. T), le terpolymère obtenu par polycondensation de l'acide 11-aminoundécanoïque, de la décanediamine, de l'hexanediamine et de l'acide téréphtalique (11/10.T/6.T), l'homopolyamide obtenu par polycondensation de métaxylylène diamine, seule ou en mélange avec la para-xylylène diamine et d'acide décanedioïque (MXD.10).

6. Utilisation selon la revendication 4, **caractérisée en ce que** le poly-arylène-éther-cétone est choisi parmi :
- un poly-éther-éther-cétone comprenant des motifs de formule I : 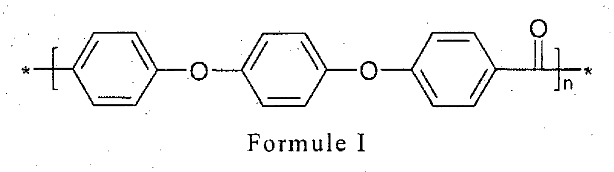
- un poly-éther-cétone comprenant des motifs de formule II: 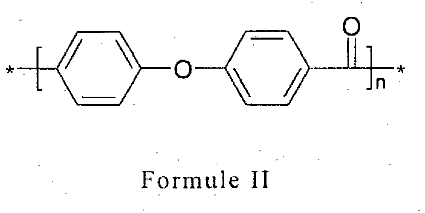
- un poly-éther-cétone-cétone comprenant des motifs de formules IIIA, de formule IIIB et leur mélange : 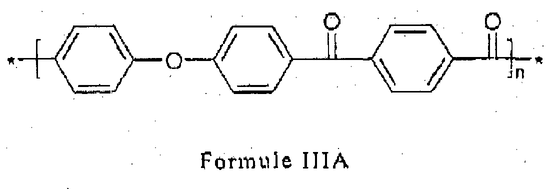 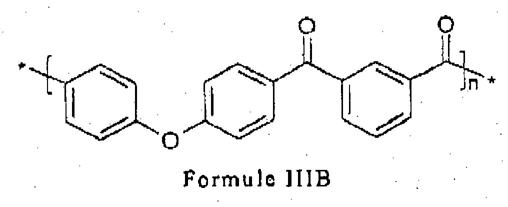
- et un poly-éther-éther-cétone-cétone comprenant des motifs de formée IV :

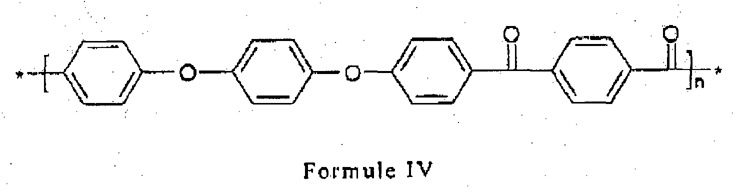

7. Utilisation selon l'une quelconque des revendications 1 à 6, **caractérisée en ce que** la composition comprend au moins un additif choisi parmi les modifiants chocs, les fibres, les colorants, les stabilisants à la lumière et à la chaleur, les plastifiants, les agents de démoulage, les ignifugeants, les agents tensioactifs, les azurants, les anti-oxydants, les lubrifiants, les anti-UV, les antistatiques, les cires naturelles, des charges différentes du graphite expansé tel que défini à la revendication 1 telles que le talc les fibres de verre, les pigments, les oxydes métalliques, les métaux, ainsi que leur mélange.

8. Utilisation selon l'une quelconque des revendications 1 à 7, **caractérisée en ce que** la composition peut être transformée par injection, par extrusion, par co-extrusion ou par compression à chaud.

9. Utilisation selon l'une quelconque des revendications 1 à 8, **caractérisée en ce que** la composition se présente sous la forme d'une structure monocouche ou d'une structure multicouche comprenant au moins deux couches dont l'une au moins des différentes couches est formée de ladite composition.

10. Utilisation selon la revendication 9, **caractérisée en ce que** la structure se présente sous la forme de fibres, d'un film, d'une feuille, d'un tube, d'un corps creux ou d'une pièce injectée.

11. Utilisation selon l'une quelconque des revendications 2 à 10, pour la fabrication de composants électriques ou électroniques, de revêtements de réacteur ou d'échangeur de chaleur, d'articles de sports, de pièces automobiles. pièces pour l'industrie aéronautique.

## Patentansprüche

1. Verwendung von expandiertem Graphit mit
einer gemäß der ASTM-Norm D6556 oder ISO-Norm 9277 gemessenen spezifischen BET-Oberfläche zwischen 15 und 30 m²/g und
einer gemäß der ASTM-Norm B329 oder der ISO-Norm 3923-2 gemessenen scheinbaren Dichte von weniger als 0,1 g/cm³
für eine durch Lasergranulometrie oder Sieben gemessene mittlere Teilchengröße von mehr als 15 µm
zum Ausrüsten der Zusammensetzung, die er mit einem thermoplastischen Polymer bildet, mit Eigenschaften überlegener Wärmeleitfähigkeit, vergleichbarer elektrischer Leitfähigkeit und verbesserter Fließfähigkeit gegenüber den bei Verwendung von Kohlenstoffnanoröhren erhaltenen Eigenschaften.

2. Verwendung nach Anspruch 1, **dadurch gekennzeichnet, dass** die Zusammensetzung mindestens ein thermoplastisches Polymer, das aus Homopolymeren und Copolymeren von (Meth) acrylsäure und (Meth)-acrylsäureestern, Vinylpolymeren, aromatischen und nichtaromatischen Polyamiden (PA), Polyether-block-amiden (PEBA), Polycarbonaten (PC), funktionellen oder nichtfunktionellen Polyolefinen, Fluorpolymeren, Polyarylenetherketonen (PAEK) und Copolymeren, die hauptsächlich die Monomere der oben aufgeführten Polymere enthalten, ausgewählt ist, umfasst.

3. Verwendung nach Anspruch 1 oder 2, **dadurch gekennzeichnet, dass** der expandierte Graphit in einem Gehalt zwischen 1 und 50 Gew.-% und vorzugsweise zwischen 5 und 35 Gew.-%, bezogen auf das Gesamtgewicht der Zusammensetzung, vorliegt.

4. Verwendung nach einem der Ansprüche 1 bis 3, **dadurch gekennzeichnet, dass** das thermoplastische Polymer aus aromatischen und nichtaromatischen Polyamiden, Polyether-block-amiden und Polyarylenetherketonen ausgewählt ist.

5. Verwendung nach Anspruch 4, **dadurch gekennzeichnet, dass** das thermoplastische Polymer aus dem Homopolyamid von Lauryllactam (PA 12), dem Homopolyamid von 11-Aminoundecansäure (PA 11), dem durch Polykondensation von Laurinlactam, Decandiamin und Terephthalsäure erhaltenen Copolyamid (PA 12/10.T), dem durch Polykondensation von 11-Aminoundecansäure, Decandiamin und Terephthalsäure erhaltenen Copolyamid (PA 11/10.T), dem durch Polykondensation von 11-Aminoundecansäure, Hexandiamin und Terephthalsäure erhaltenen Copolyamid (PA 11/6.T), dem durch Polykondensation von Hexandiamin, Terephthalsäure und Isophthalsäure erhaltenen Copolyamid (PA 6.I/6.T), dem durch Polykondensation von Dodecandiamin und Terephthalsäure erhaltenen Homopolyamid (PA 12.T), dem durch Polykondensation von 11-Aminoundecansäure, Decandiamin, Hexandiamin und Terephthalsäure erhaltenen Terpolymer (PA 11/10.T/6.T) und dem durch Polykondensation von meta-Xylylendiamin, alleine oder als Gemisch mit para-Xylylendiamin, und Decandisäure erhaltenen Homopolyamid (PA MXD.10).

6. Verwendung nach Anspruch 4, **dadurch gekennzeichnet, dass** das Polyarylenetherketon ausgewählt ist aus:
- einem Polyetheretherketon, das Einheiten der Formel I: 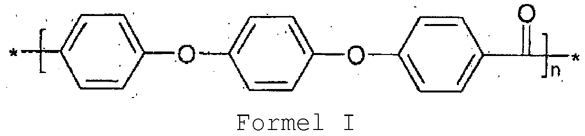 umfasst,
- einem Polyetherketon, das Einheiten der Formel II: 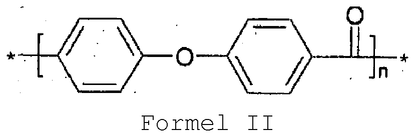 umfasst,
- einem Polyetherketonketon, das Einheiten der Formel IIIA, der Formel IIIB und ein Gemisch davon: 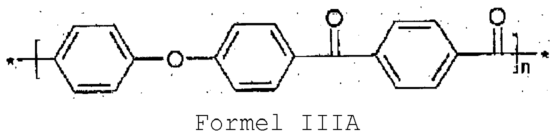 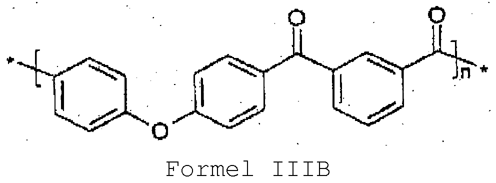 umfasst,
- und einem Polyetheretherketonketon, das Einheiten der Formel IV: 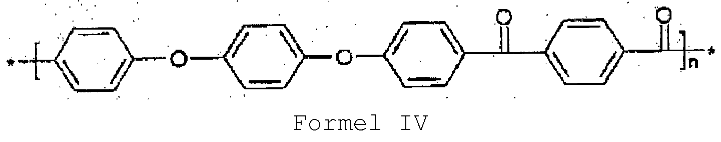 umfasst.

7. Verwendung nach einem der Ansprüche 1 bis 6, **dadurch gekennzeichnet, dass** die Zusammensetzung mindestens ein Additiv, das aus Schlagzähigkeitsmodifikatoren, Fasern, Farbmitteln, Licht- und Wärmestabilisatoren, Weichmachern, Formtrennmitteln, Flammschutzmitteln, oberflächenaktiven Mitteln, Aufhellern, Antioxidantien, Schmiermitteln, UV-Stabilisatoren, Antistatika, natürlichen Wachsen, Füllstoffen, die von dem expandierten Graphit gemäß Anspruch 1 verschieden sind, wie Talk, Glasfasern, Pigmenten, Metalloxiden, Metallen sowie einer Mischung davon ausgewählt ist, umfasst.

8. Verwendung nach einem der Ansprüche 1 bis 7, **dadurch gekennzeichnet, dass** die Zusammensetzung durch Spritzgießen, Extrusion, Coextrusion oder Warmpressen umgeformt werden kann.

9. Verwendung nach einem der Ansprüche 1 bis 8, **dadurch gekennzeichnet, dass** die Zusammensetzung in Form einer einschichtigen Struktur oder einer mehrschichtigen Struktur, die mindestens zwei Schichten umfasst, wobei mindestens eine der verschiedenen Schichten aus der Zusammensetzung gebildet ist, vorliegt.

10. Verwendung nach Anspruch 9, **dadurch gekennzeichnet, dass** die Struktur in Form von Fasern, eines Films, einer Folie, eines Rohrs, eines Hohlkörpers oder eines Spritzgussteils vorliegt.

11. Verwendung nach einem der Ansprüche 2 bis 10 zur Herstellung von elektrischen oder elektronischen Bauteilen, Reaktor- oder Wärmetauscherbeschichtungen, Sportartikeln, Autoteilen oder Teilen für die Luftfahrtindustrie.

## Claims

1. Use of expanded graphite,
the BET specific surface of which, measured according to Standard ASTM D6556 or ISO 9277, is comprised between 15 and 30 m²/g,
the bulk density of which, measured according to Standard ASTM B329 or ISO 3923-2, is less than 0.1 g/cm³,
for a mean particle size, measured by laser particle sizing or sieving, of greater than 15 µm,
in order to confer, on the composition which it forms with a thermoplastic polymer, superior thermal conductivity properties, comparable electrical conductivity properties and an improved fluidity, with respect to those obtained with the use of carbon nanotubes.

2. Use according to Claim 1, **characterized in that** the composition comprises at least one thermoplastic polymer chosen from homopolymers and copolymers of (meth)acrylic acid and of (meth)acrylic acid esters, vinyl polymers, aromatic and nonaromatic polyamides (PAs), polyether-block-amides (PEBAs), polycarbonates (PCs), functional or nonfunctional polyolefins, fluoropolymers, poly(arylene ether ketone)s (PAEKs) and copolymers predominantly comprising the monomers of the polymers mentioned above.

3. Use according to Claim 1 or 2, **characterized in that** the expanded graphite is present in a content comprised between 1 and 50% by weight and preferably between 5 and 35% by weight, with respect to the total weight of the composition.

4. Use according to any one of Claims 1 to 3, **characterized in that** the thermoplastic polymer is chosen from aromatic and nonaromatic polyamides, polyether-block-amides and poly(arylene ether ketone)s.

5. Use according to Claim 4, **characterized in that** the thermoplastic polymer is chosen from the homopolyamide of lauryllactam (PA 12), the homopolyamide of 11-aminoundecanoic acid (PA 11), the copolyamide obtained by polycondensation of lauryllactam, decanediamine and terephthalic acid (PA 12/10.T), the copolyamide obtained by polycondensation of 11-aminoundecanoic acid, decanediamine and terephthalic acid (PA 11/10.T), the copolyamide obtained by polycondensation of 11-aminoundecanoic acid, hexanediamine and terephthalic acid (PA 11/6.T), the copolyamide obtained by polycondensation of hexanediamine, terephthalic acid and isophthalic acid (PA 6.I/6.T), the homopolyamide obtained by polycondensation of dodecanediamine and terephthalic acid (PA 12.T), the terpolymer obtained by polycondensation of 11-aminoundecanoic acid, decanediamine, hexanediamine and terephthalic acid (PA 11/10.T/6.T) and the homopolyamide obtained by polycondensation of meta-xylylenediamine, alone or as a mixture with para-xylylenediamine, and decanedioic acid (PA MXD.10).

6. Use according to Claim 4, **characterized in that** the poly(arylene ether ketone) is chosen from:
- a poly(ether ether ketone) comprising units of formula I: 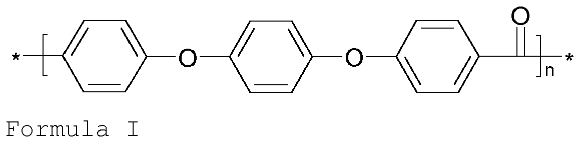
- a poly(ether ketone) comprising units of formula II: 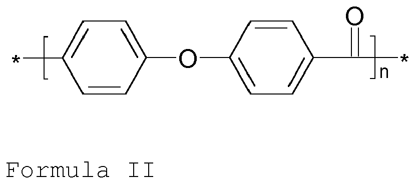
- a poly(ether ketone ketone) comprising units of formula IIIA, of formula IIIB and their mixture: 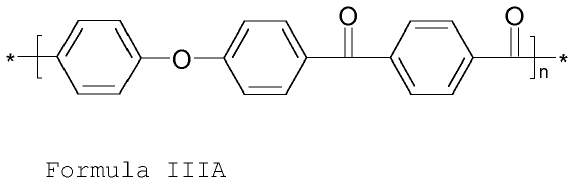 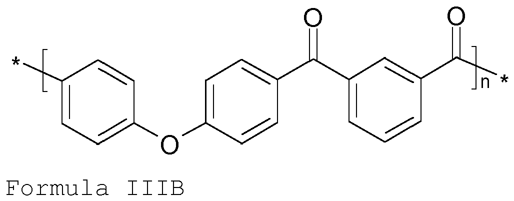
- and a poly(ether ether ketone ketone) comprising units of formula IV:

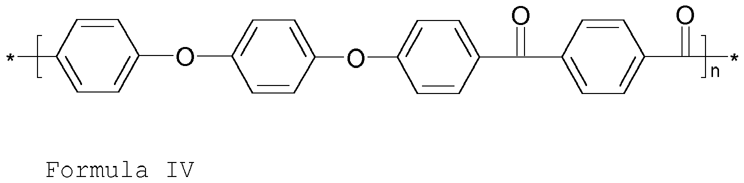

7. Use according to any one of Claims 1 to 6, **characterized in that** the composition comprises at least one additive chosen from impact modifiers, fibres, dyes, light stabilizers and heat stabilizers, plasticizers, mould-release agents, flame retardants, surface-active agents, brighteners, antioxidants, lubricants, UV stabilizers, antistatic agents, natural waxes, fillers other than the expanded graphite as defined in Claim 1, such as talc, glass fibres, pigments, metal oxides, metals, and their mixtures.

8. Use according to any one of Claims 1 to 7, **characterized in that** the composition can be converted by injection moulding, by extrusion, by coextrusion or by hot compression moulding.

9. Use according to any one of Claims 1 to 8, **characterized in that** the composition is provided in the form of a monolayer structure or of a multilayer structure comprising at least two layers, at least one of the various layers of which is formed of the said composition.

10. Use according to Claim 9, **characterized in that** the structure is provided in the form of fibres, of a film, of a sheet, of a pipe, of a hollow body or of an injection-moulded part.

11. Use according to any one of Claims 2 to 10, for the manufacture of electrical or electronic components, of reactor or heat exchanger coatings, of sports equipment, of motor vehicle parts or of parts for the aeronautical industry.
